# EUROPEAN PATENT APPLICATION

(11) **EP 4 803 695 A1**
(43) Date of publication of application: **09.09.2026**
(21) Application number: 25161808.8
(22) Date of filing: 05.03.2025
(51) Int. Cl.: D21C 5/02, D21B 1/02, D21B 1/32, D21C 9/08, D21H 11/14, D21H 27/10

(54) **METHOD AND SYSTEM FOR PURIFYING RECYCLED FIBER PULP**

(71) Applicant: Stora Enso Oyj, 65009 Karlstad (FI)
(72) Inventor: Pfitzner, Thomas, D-76297 Stutensee-Blankenloch (DE); Härmälä, Kalle, 56100 Ruokolahti (FI); Ljungqvist, Carl-Henrik, 656 38 Karlstad (SE); Tollnerius, Lena, 654 54 Karlstad (SE)
(74) Representative: Forsberg, Anna Karin

(57) **Abstract**

The present invention relates to a method for manufacturing a purified fiber pulp from recycled fiber material, where the purified fiber pulp is suitable for the production of paper- or paperboard materials, said method comprising the steps -collecting a starting material of recycled fiber material and subject it to pulping in a first aqueous liquid to form a first slurry; -subjecting the first slurry to a first purification treatment, said treatment including at least one of hydrocleaning, coarse screening, fine screening, flotation, washing and dewatering, followed by microbial deactivation by means of heating said first slurry to temperatures above 80°C to obtain a purified recycled fiber pulp; -dewatering the purified recycled pulp to a consistency >85wt% to obtain a dry recycled pulp intermediate; -repulping the purified recycled pulp intermediate in a second aqueous liquid to form a second slurry; -subjecting the second slurry to an additional, second purification treatment including washing and microbial deactivation by means an oxidizing process such as , optionally in combination with heat treatment; and -dewatering and drying the purified second slurry to a consistency between 25 - 35wt% to obtain a purified recycled fiber pulp.

## Description

### FIELD OF INVENTION

The present disclosure relates to processing recycled fiber pulp, and more particularly to a method and system for purifying and sterilizing recycled fiber pulp for use in paper and board production, especially for food packaging applications.

### BACKGROUND

The use of recycled fiber pulp in board production is often challenged and limited by the requirements for product safety. Recycled fiber pulp is produced in recycling lines and can have different Paper for Recycling (PfR) grades as raw material. Common with all Paper for Recycling (PfR) grades is that beside the valuable fiber pulp components, impurities e.g. in the form of intentionally added substances (IAS) and non-intentionally added substances (NIAS) are also collected and brought into the recycling process. An example of an IAS may be the barrier layer of a paper packaging product, and an example of a NIAS may be sand, gravel and/or microbes. Those substances and impurities need to be separated from the pulp before the recycled fiber pulp can be used in premium paper or board production.

One type of PfR grade is used beverage carton (UBC), herein denoting post-consumer beverage carton, and particularly post-consumer aseptic beverage carton, obtained from containers and packaging materials which have been collected after having been used. UBC as well as post-consumer food service board (FSB) contain high amounts of NIAS and food residues, making it unsuitable for mixing into virgin or less contaminated PfR streams. In other words, a problem associated with UBC and/or mixed waste streams containing UBC and/or FSB, as well as pulp which entirely or partially has been manufactured from UBC, is related to storage and transportation. Especially due to the microbial content, the material often starts to rot, mold and/or attracts pesticides and/or vermin such as flies, bugs and rats. This is a challenging factor for logistic chains and storage of these materials, since the collection site for the material is often distant from the mill where the material is to be used in production.

Impurities in recycled fiber pulp can be divided into size classes, their thermal behavior, and according to their origin in non-organic and organic impurities. Special attention needs to be given to the recycled fiber pulp contamination by microbiological impurities and chemicals or chemical elements which may prevent the use in food packaging materials.

Conventional /standard recycling processes for microbiological impurities and/or chemicals or chemical elements are often not sufficient or not arranged in the right order to adequately address these challenges.

It has been appreciated that an improved method for processing recycled fiber pulp is needed that overcomes one or more of these problems.

### SUMMARY

This Summary is provided to introduce a selection of concepts in a simplified form that are further described below in the Detailed Description.

In a first aspect, a method for manufacturing a purified fiber pulp from recycled fiber material is provided. The method comprises: collecting a starting material of recycled fiber material and subjecting it to pulping in a first aqueous liquid to form a first slurry; subjecting the first slurry to a first purification treatment, said treatment including at least one of hydrocleaning, coarse screening, fine screening, flotation, washing and dewatering; followed by microbial deactivation by means of heating said first slurry to temperatures above 80°C, to obtain a first purified recycled fiber pulp; dewatering and drying the first purified recycled pulp to a consistency >85wt% to obtain a dry recycled pulp intermediate; repulping the pulp intermediate in a second aqueous liquid to form a second slurry; subjecting the second slurry to an additional, second purification treatment including washing and microbial deactivation by means of an oxidizing process such as bleaching, optionally in combination with heat treatment; and dewatering the purified second slurry to a consistency between 25 - 35wt% to obtain a second purified recycled fiber pulp.

This method provides a comprehensive approach to purifying recycled fiber material, ensuring the removal of contaminants and microbial deactivation through multiple stages, resulting in a high-quality purified fiber pulp suitable for food-grade paper and paperboard production.

The dry recycled pulp intermediate obtained in this process is purified to a level where it can be stored and/or transported at no or low risk of microbial degradation including molding and/or rotting. This feature provides a logistic advantage, e.g. in cases where the recycled pulp is to be transported to a board mill situated far from the collection and pulping site. The ability to store and transport the dry recycled pulp intermediate may allow for greater flexibility in the supply chain and production processes, potentially enabling more efficient use of resources and facilities.

The first purification treatment may further include a barrier separation step preceding the microbial deactivation, preferably a polymer and aluminum film separation method including mechanical filtration and/or flotation to obtain a polymer and aluminum (PolyAl) fraction and a recycled fiber pulp fraction, where said PolyAl fraction is separated and removed from said fiber pulp fraction. The barrier separation step may be used to remove polymer films, polymer-aluminum films or other combinations of materials providing functional barriers such as polyethylene terephthalate (PET), polyvinyl alcohol (PvOH), polyhydroxyalkanoate (PHA) and/or dispersion coatings. This barrier separation method effectively removes polymer and aluminum contaminants, which are common in recycled fiber materials, thereby improving the purity of the resulting fiber pulp.

The microbial deactivation in the first purification treatment may include heating of said first slurry to temperatures above 80°C, preferably above 85°C, optionally at elevated processing pressure above atmospheric pressure, resulting in reduction of microbial activity by at least 30%, preferably at least 50% such as in the range of 60-100%. This high-temperature treatment significantly reduces microbial activity, enhancing the safety and quality of the recycled fiber pulp e.g. for use in food packaging applications.

The microbial deactivation in the second purification treatment may include subjecting the second slurry to an oxidizing process in combination with heating the slurry to temperatures above 50°C, such as above 80°C, or above 90°C. This combined oxidizing and heating process further reduces microbial contamination while also improving cleanliness of the pulp.

Alternatively, the microbial deactivation in the second purification treatment may include subjecting the second slurry to heat treatment at atmospheric pressure. This method provides an effective microbial deactivation option without the need for pressurized equipment.

In another alternative, the microbial deactivation in the second purification treatment may include subjecting the second slurry to superheated heat treatment under autoclaving conditions. Autoclaving provides a highly effective method for sterilizing the pulp, ensuring the highest level of microbial deactivation.

The oxidizing process in the second purification treatment may be a bleaching process selected from the group consisting of hydrogen peroxide bleaching, ozone bleaching, oxygen bleaching, chloride bleaching, hypochlorite bleaching, and extraction bleaching. This range of bleaching options allows for flexibility in choosing the most appropriate method based on the specific characteristics of the recycled fiber material and the desired properties of the final product.

The second purified recycled fiber pulp obtained after the second purification treatment may be used in a paper- or paperboard machine alone or blended with virgin pulp to produce paper or paperboard material containing at least 2wt% recycled fiber material, preferably at least 5wt% or more preferably at least 10wt%. This enables the production of high-quality paper and paperboard products with a significant recycled content, contributing to sustainability and resource conservation.

In a second aspect, a system for manufacturing a purified fiber pulp from recycled fiber material is provided. The system comprises:
- means for collecting a starting material of recycled fiber material and a primary pulper for pulping the starting material in a first aqueous liquid to form a first slurry;
- cleaning equipment for subjecting the first slurry to a first purification treatment including equipment for at least one of hydrocleaning, coarse screening, fine screening, flotation, washing and dewatering; and equipment for heat treatment for heating the slurry to temperatures above 80°C, to produce a purified pulp;
- a dewatering and/or drying device arranged to dry the purified pulp produced in the purification treatment equipment to a consistency >85wt% to produce a dry recycled pulp intermediate;
- optional storage- and/or transportation means for storing and/or transporting the dried recycled pulp intermediate produced in the dewatering and/or drying device for a time period exceeding 1 day, such as exceeding 7 days;
- a secondary pulper for repulping the purified recycled pulp intermediate in a second aqueous liquid to form a second slurry;
- cleaning equipment for subjecting the second slurry to a second purification treatment comprising washing and an oxidizing process, optionally oxidizing in combination with heat treatment; and
- a post dewatering device arranged to dry the purified second slurry to a consistency between 25 - 45wt% to obtain a purified fiber pulp suitable for the production of paper- or paperboard materials.

This system provides a comprehensive and efficient setup for manufacturing high-quality purified fiber pulp from recycled materials, incorporating multiple purification stages and allowing for intermediate storage or transportation of the dried recycled pulp intermediate.

### BRIEF DESCRIPTION OF FIGURES

Embodiments of the invention will be described, by way of example, with reference to the following drawings, in which:
Fig. 1 shows an illustrative diagram of the process according to one aspect of the invention, and
Fig. 2 shows another illustrative diagram of the process according to another aspect of the invention, demonstrating that the second purification step may be performed in different ways depending on the intended subsequent use of the cleaned fiber pulp.

Common reference signs are used throughout the figures to indicate similar features.

### DETAILED DESCRIPTION

The present invention relates to a method and system for manufacturing purified fiber pulp from recycled fiber material providing a solution to logistic and storage challenges normally associated with fiber pulp produced from PfR grades. This purified fiber pulp is particularly suitable for the production of paper and paperboard materials, especially those intended for food packaging applications. The invention addresses the growing demand for sustainable packaging solutions and recycle of fiber-based packages while maintaining high standards of product safety and quality.

Recycled fiber material presents unique challenges in paper and board production due to the presence of impurities and contaminants. These impurities can include microbiological contaminants, chemicals, and other unwanted substances that may compromise the safety and quality of the final product, particularly when used in food packaging applications. The present invention provides a novel approach to purifying recycled fiber material, enabling for more efficient transport and logistics thereof.

The method and system described herein involve a multi-step purification process that effectively removes impurities and contaminants from recycled fiber material. A particular advantage associated with the present invention is improvements in transport and logistics. Also, the inventive process results in a purified fiber pulp that can be used alone or blended with virgin pulp in paper and paperboard production. The purified fiber pulp produced by this method allows for the incorporation of significant amounts of recycled material in the final product, with at least 2wt% recycled fiber material, preferably at least 5wt%, or more preferably at least 10wt%. The purified fiber pulp produced by this method may even be used to produce a material consisting of 100% recycled fiber.

By enabling the use of higher percentages of recycled fiber material in paper and paperboard production, this invention contributes to more sustainable manufacturing practices in the packaging industry. The purified fiber pulp produced through this method meets the stringent requirements for food packaging applications, addressing concerns related to product safety and regulatory compliance.

The method for manufacturing purified fiber pulp begins with collecting a starting material of recycled fiber material. This recycled fiber material may include various types of paper and paperboard products, such as newspapers, magazines, office paper, cardboard, and packaging materials including used beverage carton (UBC), used liquid paperboard (LPB), old corrugated containers (OCC) and used food service board (FSB).

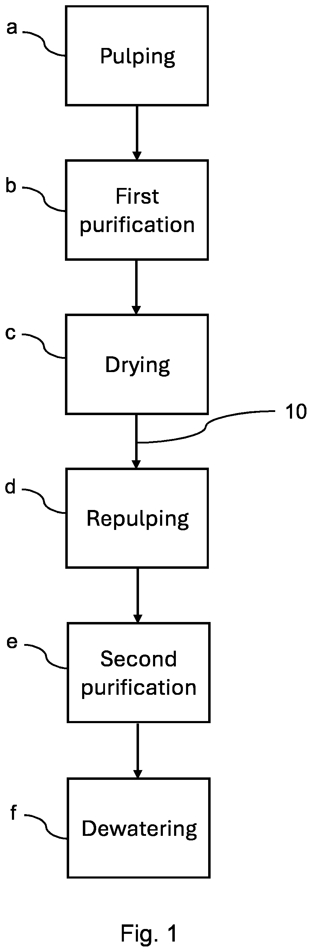

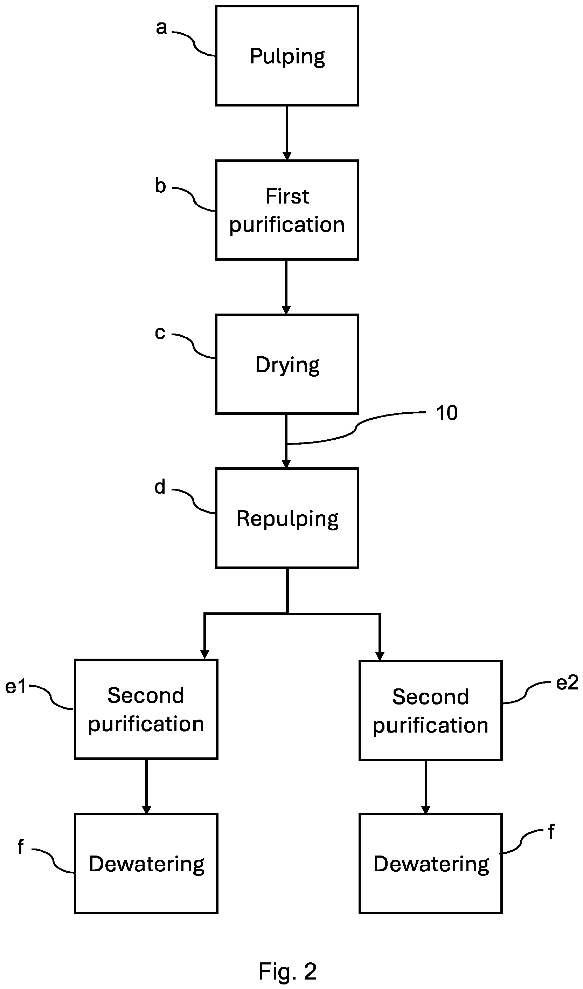

The collected recycled fiber material is then typically shredded and prewashed before it is subjected to a primary pulping in a first aqueous liquid to form a first slurry. The primary pulping is referred to as a) in Fig. 1 and Fig. 2.

The pulping process typically involves breaking down the recycled fiber material into individual fibers using mechanical and chemical means. A primary pulper may be used to mix the recycled fiber material with the first aqueous liquid, which may include water and various chemicals to aid in the breakdown of the material. The pulping conditions, such as temperature, pH, and agitation speed, can be adjusted based on the specific types of recycled fiber material being processed.

After the primary pulping, the resulting first slurry may optionally be stored in a storage tank for a period e.g. exceeding 30 minutes. This storage period allows the fibers to revitalize in water, which can improve the quality and consistency of the pulp. During this storage period, the recycled fiber pulp may be recirculated around the storage tanks to homogenize the quality parameters. This recirculation process helps ensure a uniform distribution of fibers and other components throughout the slurry.

The recirculation of the recycled fiber pulp around the storage tanks may be achieved using pumps and piping systems. The rate of recirculation can be adjusted to optimize the homogenization process while minimizing potential damage to the fibers. The homogenization of quality parameters through recirculation may include factors such as fiber length distribution, fines content, and consistency.

By carefully controlling the primary pulping process and subsequent storage and recirculation, a first slurry with consistent properties can be produced. This first slurry serves as the starting point for further purification treatments in the manufacturing process of purified fiber pulp from recycled fiber material.

In a next step, referred to as b) in Fig. 1 and Fig. 2, the first slurry is subjected to a first purification treatment, which is a crucial step in the current process. This treatment involves several stages designed to remove various types of impurities and contaminants from the first slurry.

In summary, the first purification treatment includes at least one of: hydrocleaning, coarse screening, fine screening, flotation, washing and dewatering. After such first cleaning, the first purification treatment further comprises subjecting the slurry to microbial deactivation by means of heat treatment to temperatures above 80°C.

The first purification treatment may also comprise barrier separation preceding at least said heat treatment, for instance in case the starting material contains UBC and/or LPB, including a polymer and aluminum film separation method. This method typically employs mechanical filtration and/or flotation techniques to separate polymer and aluminum (PolyAl) components from the fiber pulp fraction. The barrier separation process effectively removes non-fiber materials that are commonly found in recycled fiber sources, such as plastic coatings and aluminum foil linings from packaging materials.

The first purification treatment may begin with high density cleaner, e.g. hydrocleaning, also referred to as hydrocyclone separation. Hydrocyclones are used in the pulp and paper making industry for cleaning fiber pulp suspensions from contaminants, in particular, but not exclusively, from contaminants that differ from fibers in density such as sand, grit, glass, staples and other small, heavy debris and abrasives.

In order to further remove large and/or small particles, the slurry may undergo coarse- and/or fine screening. Coarse screening is designed to remove larger particles and contaminants from the pulp. Coarse screening typically results in the removal of particles having a diameter or width above 1 mm such as above 2 mm. These larger particles may include unprocessed fiber bundles, plastic fragments, or other debris that could negatively impact the quality of the final purified fiber pulp. Coarse screening equipment usually includes drum screens with perforated openings having a diameter adapted to the debris-size to be removed. Fine screening is designed to remove fine particles having a diameter above 0.1 mm such as above 0.2 mm. Fine screening equipment usually includes drum screens with slotted openings having a width adapted to the debris-size to be removed.

The first purification treatment also comprises microbial deactivation. This process involves heating the first slurry to temperatures above 80°C, preferably above 85°C, optionally at elevated processing pressure above atmospheric pressure. The elevated temperature and optional elevated pressure conditions lead to reduced microbial activity in the slurry. In some examples, this microbial deactivation process may result in a reduction of microbial activity by at least 30%, preferably at least 50%, such as in the range of 60-100%.

By combining these various purification techniques - hydrocleaning, coarse and fine screening, flotation, washing, dewatering, microbial deactivation, chemical treatment, and extended reaction time - the first purification treatment effectively removes a wide range of impurities and contaminants from the recycled fiber material. This comprehensive approach helps to ensure that the resulting purified fiber pulp meets the necessary quality standards for use in paper and paperboard production, particularly for applications with stringent cleanliness requirements such as e.g. food packaging materials.

Following the first purification treatment, the purified recycled pulp undergoes a dewatering and drying process to obtain a dry recycled pulp intermediate, referred to as 10 in Fig. 1 and Fig. 2. This dewatering step, referred to as c) in Fig. 1 and Fig. 2, is crucial in the overall process of the invention. The dewatering process in step c) involves removing a significant amount of water from the purified recycled pulp to achieve a high consistency, i.e. above 85wt%. A dewatering and/or drying device may be used to dry the purified pulp produced in the purification treatment equipment. The dewatering and/or drying device may employ various techniques such as mechanical pressing, vacuum filtration, flash drying and/or centrifugation to remove water from the pulp.

The goal of the dewatering and drying process is to achieve a consistency greater than 85wt% in the dry recycled pulp intermediate 10. In some examples, the solid content of the purified recycled fiber pulp transferred from the purification process c) to the subsequent preparation process may be above 90%. This high consistency is important for several reasons.

Firstly, a high consistency reduces the volume of material that needs to be transported or stored, which can lead to significant cost savings in logistics as well as reduced carbon emissions. The purified and dried recycled fiber pulp may be transported to a paper and board production site, potentially over distances exceeding 1,000 kilometers. By removing excess water, the weight and volume of the material are substantially reduced, making transportation more efficient and economical as well as more sustainable since carbon emissions are reduced.

Secondly, the high consistency of the dry recycled pulp intermediate 10 helps to limit the transfer of unwanted substances to subsequent processing stages. Water can act as a carrier for various contaminants, so by reducing the water content, the potential for carrying over impurities is minimized.

Thirdly, the dry recycled pulp intermediate 10 with a high consistency is more stable during storage and transportation. The reduced moisture content helps to prevent microbial growth and degradation of the pulp, maintaining its quality over extended periods.

The dewatering process may involve multiple stages to progressively increase the consistency of the pulp. For example, an initial dewatering stage may use a wire press or belt press to remove free water, followed by a more intensive dewatering and/or drying stage using a screw press or other high-pressure dewatering/drying equipment.

Temperature control may be implemented during the dewatering and/or drying process to optimize water removal while minimizing energy consumption. In some examples, the pulp may be heated to reduce water viscosity and improve dewatering and/or drying efficiency.

After the dewatering and drying process, the dry recycled pulp intermediate 10 may be formed into bales, sheets, or other suitable forms and possibly packed for storage and transportation. These forms allow for efficient handling and stacking, further optimizing logistics operations.

The dry recycled pulp intermediate 10 produced through this dewatering and drying process serves as a versatile intermediate product. It can be stored for extended periods, transported over long distances, or immediately used in subsequent processing steps, depending on the specific requirements of the paper or board production facility.

Upon using the dry recycled pulp intermediate 10 in a further papermaking process, the intermediate is to be repulped in a second aqueous liquid to form a second slurry, referred to as d) in Fig. 1 and Fig 2. Thus, steps a) - c) may be performed at a first site, and steps d) - f) may be performed at a second site different from the first, wherein the recycled pulp is transported between the first and second sites in the form of said intermediate 10.

The repulping process takes place in a secondary pulper designed to break down the dry recycled pulp intermediate and disperse the fibers in the second aqueous liquid. This second aqueous liquid may consist of water, and in some examples, may include additional chemicals or additives to aid in the repulping process or to further purify the fibers. The consistency of the second slurry formed in the secondary pulper may be controlled to optimize subsequent processing steps and is preferably between 10-15wt%. The consistency may be adjusted by varying the ratio of dry recycled pulp intermediate to the second aqueous liquid, or by using consistency control equipment within the secondary pulper. The duration of the repulping process in the secondary pulper may vary depending on factors such as the characteristics of the dry recycled pulp intermediate, the desired consistency of the second slurry, and any additional treatments being applied. The process may be monitored and controlled to ensure complete dispersion of the fibers and uniform distribution of any additives.

After repulping the dry recycled pulp intermediate, the resulting second slurry undergoes an additional, second purification treatment referred to as e) in Fig. 1 and as e1) and e2) respectively in Fig. 2. This second purification treatment e) includes at least one of the following process steps: deflaking, dispersing, flotation, dewatering and washing. In addition, the second purification step also includes microbial deactivation through an oxidizing process such as bleaching, optionally in combination with heat treatment.

Before the second purification treatment, preferably before deflaking and/or dispersing, chemicals may be added to the slurry. These chemicals can serve various purposes, such as pH adjustment, bleaching, or as complexing agents. Adding the chemicals before the deflaker and/or disperser serves a dual purpose: it deflakes/disperses the pulp and simultaneously mixes in the added chemicals. After the addition of chemicals, the slurry may be fed into a reaction tower, e.g. such as an oxidizing tower. The reaction tower allows for an extended reaction time, which may be up to 90 minutes. During this time, the chemicals can interact with the fibers and contaminants in the slurry, enhancing the purification process.

The dewatering and/or washing process in the second purification treatment e) serves to further remove residual contaminants and chemicals. Washing may be performed using various methods, such as displacement washing, dilution washing, or press washing. The choice of washing method may depend on factors such as the consistency of the slurry, the types of contaminants present, and the desired cleanliness level of the final purified fiber pulp. The second purification treatment further comprises an oxidizing process to remove chemical contaminants. The oxidizing process may be combined with heat treatment for enhanced effectiveness. The oxidizing process in the second purification treatment e) may employ various methods, each with its own advantages and applications, all used for the purpose of removing chemical contaminants and reduce microbial activity. A way of oxidizing is bleaching. Some examples of bleaching methods that may be used include:
1. Hydrogen peroxide bleaching: This method uses hydrogen peroxide as the primary bleaching agent. Hydrogen peroxide bleaching may be effective in removing color from the pulp while also providing some antimicrobial action.
2. Ozone bleaching: Ozone is a powerful oxidizing agent that may be used for both bleaching and microbial deactivation. Ozone bleaching may be particularly effective in reducing the chemical oxygen demand (COD) of the pulp.
3. Oxygen bleaching: This method uses molecular oxygen as the bleaching agent. Oxygen bleaching may be environmentally friendly and may help in delignification of the pulp.
4. Chloride bleaching: Chlorine-based bleaching agents may be used for their strong oxidizing properties. However, environmental concerns have led to a reduction in the use of elemental chlorine in many pulp and paper operations.
5. Hypochlorite bleaching: Sodium hypochlorite may be used as a bleaching agent, providing both color removal and microbial deactivation.
6. Extraction bleaching: This method may involve the use of alkaline solutions to extract colored compounds from the pulp. Extraction bleaching may be used in combination with other bleaching stages for improved effectiveness.
7. Treatment with one or more chemicals selected from the group consisting of performic acid (PFA), peracetic acid (PAA), chlorine dioxide (ClO2) and dithionite.

The choice of bleaching method or combination of methods may depend on factors such as the initial quality of the recycled fiber pulp, the desired cleanliness of the final product, and environmental considerations.

Microbial deactivation is a crucial component of the second purification treatment e), aimed at reducing the microbial load in the pulp to meet stringent safety requirements e.g. for food packaging applications. In some examples, the oxidizing process may be combined with heat treatment to enhance microbial deactivation. The second slurry may be subjected to temperatures above 50°C, such as above 80°C, or above 90°C during the oxidizing or bleaching process. This elevated temperature may increase the effectiveness of the oxidizing agents while also providing additional thermal deactivation of microorganisms.

In Fig. 2, the second purification step is illustrated as two variants: e1) and e2). This is to demonstrate that the second purification step can be adapted according to the intended further use of the pulp, in particular how strict product safety requirements the produced material must be complied with. For instance, the requirements for short term food contact materials (FCM) are less strict than the requirements for long term FCM.

For achieving short term FCM compliance, the second purification e1) may include washing (performed as described above) and microbial deactivation through atmospheric heat treatment and bleaching. For achieving long term FCM, the second purification e2) may include washing (performed as described above) and microbial deactivation through superheated heat treatment for instance under autoclaving conditions. The term "autoclaving" or "autoclaving conditions" may, in the context of this description, be understood as referring to a process of subjecting the fibers to saturated steam at a temperature of about 121°C, or at a temperature of at least 120°C, for a time period of at least 10 minutes, or at least 15 minutes. Autoclaving is typically done at a gauge pressure of 103 kPa.

Heating, dispersing and/or oxidizing of the pulp may be performed under pressure to reach higher temperatures. This pressurized treatment may allow for more effective penetration of oxidizing chemicals into the fiber structure and may enhance the overall purification process.

The cleaning equipment used for the second purification treatment e); e1); e2) may comprise washing apparatus, oxidizing reactors, and heating systems. These components may be arranged in a sequence that optimizes the purification process. For example, a washing stage may precede the oxidizing stage to remove loose contaminants before chemical treatment. The oxidizing reactor may be designed to allow for precise control of temperature, pressure, and chemical dosing to achieve the desired level of purification and microbial deactivation. It is also conceivable to recover heat from the heat- or autoclaving treatments to improve efficiency and reduce costs, as well as cleaning of the water streams used in the process.

In some examples, the second purification treatment may include multiple stages of washing and bleaching, with each stage targeting specific types of contaminants or color compounds. This multi-stage approach may allow for a more thorough and efficient purification process.

Following the second purification treatment, the purified second slurry undergoes a final dewatering process to obtain a purified recycled fiber pulp with a specific consistency range. A post dewatering device may be used to dry the purified second slurry to a consistency between 25 - 35wt%. This range provides a balance between sufficient dewatering for efficient handling and processing, while maintaining enough moisture to preserve the fiber properties and facilitate further treatment or mixing. In some examples, the purified recycled fiber pulp at this consistency may undergo further processing steps, such as refining or chemical treatment, before being used in paper or paperboard production. The 25 - 35wt% consistency range may be suitable for many of these potential downstream processes, providing flexibility in the manufacturing workflow. Also, this consistency range may allow for easier blending with other pulp types, such as virgin pulp, in subsequent papermaking processes. A post refining step may also be added to reach strength properties of the cleaned recycled fiber pulp.

The purified recycled fiber pulp obtained through this process may be suitable for the production of paper or paperboard materials. In some examples, the purified recycled fiber pulp may be used together with virgin pulp in the production of fiber-based materials such as paperboard. For instance, the purified recycled fiber pulp may be incorporated into the production of liquid packaging paperboard, where high standards of cleanliness and purity are required.

### EXAMPLE

Collected post-consumer UBC starting material was pulped in a primary pulper to break recovered sheets into single fibers and small flakes, as well as detaching and partially dispersing printing ink particles.

The pulp was thereafter subjected to a first purification treatment which in the current example comprised, in the following order: barrier separation, high density cleaning, coarse screening, flotation, hydrocleaning (high- and low consistency), fine screening, washing, dewatering and heating.

The steps of the first purification treatment will now be described.

The pulp from the primary pulper was subjected to a polymer and aluminum film separation method to obtain a polymer and aluminum (PolyAl) fraction and a fiber fraction. The PolyAl fraction was removed and the remaining raw pulp was analyzed as shown in Table 1; Position 1.

The raw pulp was then diluted and subjected to a high density cleaner to remove bigger and heavy particles such as stones and gravel, followed by coarse screening at a consistency of 1.6 wt%. The coarse screener had a step rotor alongside the contour-hole screen basket so that large flat contaminants were efficiently removed. The holes in the screen were 1.6 mm in diameter.

After coarse screening, the accepted pulp was subjected to flotation to reduce ink-, filler- and dirt content and also for partial fines removal. The pulp was then subjected to fine screening using rotor screeners based on centrifugal screening principle (Multifoil rotor) operated in cascade mode at a consistency of 1.3 wt% and then subjected to a thickener step (inlet consistency 1.2 wt% and accept consistency 6.1 wt%. The slit size in the screens was 0.15 mm.

The obtained output pulp stream was diluted to a consistency of 1 wt% water and then subjected to washing/dewatering to remove dissolved contaminants. The screened and washed pulp was analyzed and the results are shown in Table 1; Position 2.

Next, in order to reduce microbial load, the pulp was subjected to heat treatment at temperatures above 80°C. After heat treatment, the pulp was analyzed and the results are shown in Table 1; Position 3.

The pulp was then dewatered and dried to a dry content above 85wt% to remove bound water and conserve the pulp for storing and transportation.

The dry, conservated pulp was then re-slushed in water in a secondary pulper to prepare for a second purification treatment. In the current example, the second purification treatment was performed in two different ways; a first way to prepare the pulp for end-uses as short term food contact materials (FCM) and a second way to prepare the pulp for end-uses as long term food contact materials, wherein the latter puts higher demands of purity levels.

For short term FCM, the pulp was subjected to dispersion followed by washing and dewatering to remove dissolved contaminants, and oxidation to remove chemical contaminants. The pulp was also subjected to heat treatment at temperatures above 80°C at atmospheric pressure. After heat treatment, the pulp was analyzed and the results are shown in Table 1; Position 4A.

For long term FCM, the pulp was subjected to dispersion followed by washing and dewatering to remove dissolved contaminants, and oxidation to remove chemical contaminants. The pulp was also subjected to heat treatment at autoclaving conditions at temperature above 120°C and pressure above 100 kPa. After autoclaving, the pulp was analyzed and the results are shown in Table 1; Position 4B.

**Table 1. Compliance of purified recycled UBC pulp for food safety requirements (BDL=Below detection limit; Acc.=acceptable; Not acc.= not acceptable; No migr.= No migration**

| **Property (of resulting pulp)** | **Unit/Position*** | **1** | **2** | **3** | **4A** | **4B** |
|---|---|---|---|---|---|---|
| Wood fiber content | Weight % | 60 | 95 | 95 | 98 | 98 |
| Polymer Barrier content in pulp | Weight % | 35 | 1.5 | 1.5 | 0.2 | 0.2 |
| Macro contaminants in pulp | Weight % | 8 | 3 | 3 | 1 | 1 |
| Viable aerobic bacteria | CFU/g | 10^7 | 10^7 | 10^5 | ~10^3 | ~10^2 |
| Aerobic bacterial spores | CFU/g | 10^5 | 10^5 | 10^5 | ~10^3 | ~10^2 |
| Fungi | CFU/g | 10^4 | 10^4 | 0 | 0 | 0 |
| Bisphenols | µg/g | 0.3 | 0.1 | 0.1 | BDL | BDL |
| Sensorics tests | | Not acc. | Acc. | Acc. | Good | Good |
| Volatile components (tot VOC) | µg/kg | 10000 | 5000 | 4000 | 3000 | 2000 |
| Total flourine (PFAS indication) | mg/kg | 5 | 3 | 3 | 2 | 2 |
| Antraquinone | mg/kg | 0.1 | 0.05 | 0.04 | BDL | BDL |
| OBA and colour fasteness | migration test | No migr. | No migr. | No migr. | No migr. | No migr. |
| Heavy metals | µg/l extraction | BDL | BDL | BDL | BDL | BDL |
| Azo colorants/ Prim. aromatic amines | mg/kg | BDL | BDL | BDL | BDL | BDL |
| AKD (sizing agent) | kg/t | 1.5 | 0.7 | 0.7 | 0.3 | 0.3 |
| Benzophenone | mg/kg food | BDL | BDL | BDL | BDL | BDL |
| Aromatic Mineral oils | mg/kg | BDL | BDL | BDL | BDL | BDL |

### *Position

| | |
|---|---|
| -UBC in primary pulper: | 1 |
| -Intermediate pulp before heating/drying: | 2 |
| -Intermediate pulp after heating/drying: | 3 |
| -pulp after second purification (short term FCM): | 4A |
| -pulp after second purification (long term FCM): | 4B |

The effectiveness of the method according to the invention and the comprised treatment steps were monitored through various quality control measures, such as microbial load assessment, and chemical residue analysis. These quality control measures demonstrated and summarized in Table 1 show that the fiber pulp when purified according to the invention meets the necessary standards for use in paper and paperboard production, particularly for food packaging applications.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognize that numerous further modifications and combinations of various aspects are possible. Accordingly, the described aspects are intended to encompass all such alterations, modifications, and variations that fall within the scope of the appended claims.

## Claims

1. A method for manufacturing a purified fiber pulp from recycled fiber material, where the purified recycled fiber pulp is suitable for the production of paper- or paperboard materials, said method comprising the steps:
a. collecting a starting material of recycled fiber material and subject it to pulping in a first aqueous liquid to form a first slurry;
b. subjecting the first slurry to a first purification treatment, said treatment including at least one of hydrocleaning, coarse screening, fine screening, flotation, washing and dewatering, followed by microbial deactivation by means of heating said first slurry to temperatures above 80°C, to obtain a first purified recycled fiber pulp;
c. dewatering and drying the first purified recycled pulp to a consistency >85wt% to obtain a dry recycled pulp intermediate;
d. repulping the pulp intermediate in a second aqueous liquid to form a second slurry;
e. subjecting the second slurry to an additional, second purification treatment including washing and microbial deactivation by means of an oxidizing process such as bleaching, optionally in combination with heat treatment; and
f. dewatering and drying the purified second slurry to a consistency between 25 - 35wt% to obtain a second purified recycled fiber pulp.

2. The method according to claim 1, wherein step b) further includes barrier separation, preferably polymer and aluminum film separation method including mechanical filtration and/or flotation to obtain a polymer and aluminum (PolyAl) fraction and a recycled fiber pulp fraction, where said PolyAl fraction is separated and removed from said fiber pulp fraction.

3. The method according to any one of claims 1 or 2, wherein said coarse screening in step b) results in removal of particles having a diameter or width above 1 mm, such as above 2 mm.

4. The method according to any one of the previous claims, wherein said fine screening in step b) results in the removal of fine particle contaminants having a diameter or width above 0.1 mm, such as above 0.2 mm.

5. The method according to any one of the previous claims, wherein said microbial deactivation in step b) includes heating of said first slurry to temperatures above 80°C, preferably above 85°C, at elevated processing pressure above atmospheric pressure, resulting in reduction of microbial activity by at least 30%, preferably at least 50% such as in the range of 60-100%.

6. The method according to any one of the previous claims, wherein the microbial deactivation in step e) includes subjecting the second slurry to an oxidizing process or chemical treatment in combination with heating the slurry to temperatures above 50°C, such as above 80°C, or above 90°C.

7. The method according to any one of the previous claims, wherein the microbial deactivation in step e) includes subjecting the second slurry to heat treatment at atmospheric pressure.

8. The method according to any one of claims 1-6, wherein the microbial deactivation in step e) includes subjecting the second slurry to superheated heat treatment under autoclaving conditions at temperatures above 120°C for at least 10 minutes.

9. The method according to any one of the previous claims, wherein the oxidizing process in step e) is selected from the group consisting of hydrogen peroxide bleaching, ozone bleaching, oxygen bleaching, chloride bleaching, hypochlorite bleaching, and extraction bleaching.

10. The method according to any one of the previous claims, wherein the second purification in step e) includes treatment with one or more chemicals selected from the group consisting of performic acid (PFA), peracetic acid (PAA), chlorine dioxide (ClO2) and dithionite.

11. The method according to any one of the previous claims, wherein the purified fiber pulp obtained in step f) is used in a paper- or paperboard machine alone or blended with virgin pulp to produce paper or paperboard material containing at least 2wt% recycled fiber material, preferably at least 5wt% or more preferably at least 10wt%.

12. A system for manufacturing a purified fiber pulp from recycled fiber material, where the purified fiber pulp is suitable for the production of paper- or paperboard materials, said system comprising:
i. means for collecting a starting material of recycled fiber material and a primary pulper for pulping the starting material in a first aqueous liquid to form a first slurry;
ii. cleaning equipment for subjecting the first slurry to a first purification treatment equipment including:
- equipment for at least one of hydrocleaning, coarse screening, fine screening, flotation, washing and dewatering ; and
- equipment for heat treatment for heating the slurry to temperatures above 80°C, to produce a purified pulp;
iii. a dewatering and/or drying device arranged to dry the purified pulp produced in the purification treatment equipment to a consistency >85wt% to produce a dry recycled pulp intermediate;
iv. optional storage- and/or transportation means for storing and/or transporting the dried recycled pulp intermediate produced in the dewatering and/or drying device for a time period exceeding 1 day, such as exceeding 7 days;
v. a secondary pulper for repulping the purified recycled pulp intermediate in a second aqueous liquid to form a second slurry;
vi. cleaning equipment for subjecting the second slurry to a second purification treatment comprising a washing and oxidizing process, optionally oxidizing process in combination with heat treatment; and
vii. a post dewatering device arranged to dry the purified second slurry to a consistency between 25 - 45wt% to obtain a purified fiber pulp suitable for the production of paper- or paperboard materials.
